# EUROPEAN PATENT APPLICATION

(11) **EP 4 491 968 A1**
(43) Date of publication of application: **15.01.2025**
(21) Application number: 23184471.3
(22) Date of filing: 10.07.2023
(51) Int. Cl.: F24S 20/67, H02S 20/25, E04B 7/06, E04D 3/361, E04D 13/17

(54) **ASSEMBLY FOR PLACEMENT ON THE RIDGE OF A ROOF**

(71) Applicant: Ubbink B.V., 6984 AA Doesburg (NL)
(72) Inventor: SLINGERLAND, Everdina Jannigje, 6984 AA Doesburg (NL)
(74) Representative: van Dam, Vincent

(57) **Abstract**

The present invention relates to an assembly for placement on the ridge of a roof. The invention also relates to a building construction comprising a ridged roof, wherein the assembly according to any of the claims is positioned over the ridge of said roof. The invention also relates to a method of constructing a building comprising placing the assembly over the ridge of a roof.

## Description

The present invention relates to an assembly for placement on the ridge of a roof. The invention also relates to a building construction comprising a ridged roof, wherein the assembly according to any of the claims is positioned over the ridge of said roof. The invention also relates to a method of constructing a building comprising placing the assembly over the ridge of a roof.

### Introduction

Roofs of buildings, such as houses, often contain functional elements such as photovoltaic collectors, thermal collectors or a combination thereof, skylights, ventilation elements and/or ducting terminals, for instance a chimney, a terminal of a heat recovery system or a terminal of a central heating system.

These functional elements are usually mounted on or through an existing roof. For this purpose, construction workers need to perform actions on the roof which requires safety precautions, and which involves risks for the worker. In addition, any modification to an existing roof involves the risk of damages and may result in leaking roofs. For instance, mounting of functional element may require drilling holes in the roof, replacing tiles or sealing functional elements, all of which may result in leakage if not carried out correctly, which is a challenge when the work needs to be performed on a roof.

The present invention aims to overcome these problems.

### Summary of the invention

In a first aspect the invention relates to an assembly for placement on the ridge of a roof construction, comprising a first panel and a second panel, wherein at least one of the first and second panel comprises one or more integrated functional element; wherein the first and second panels are connected to each other via a hinged connection part which allows an adjustable angle between the first and second panel.

In a second aspect the invention relates to a building construction comprising a ridged roof, wherein the assembly according to the first aspect is positioned over the ridge of a roof construction of said building with the first panel on one side of the ridge and the second panel on the opposite side of the ridge.

In a third aspect the invention relates to method of constructing a building, and in particular a roof thereof, comprising placing the assembly of the first aspect over the ridge of a roof construction with the first panel on one side of the ridge and the second panel on the opposite side of the ridge.

### Short description of the drawings

Fig. 1A shows a schematic representation of an exemplary embodiment of an assembly according to the invention in a perspective view.
Fig. 1B shows a schematic representation of the assembly of Fig. 1A mounted on a roof construction in a perspective view.
Fig. 2 shows a detailed schematic representation around the hinged connection part of the assembly shown in Fig.1 in a perspective view.
Fig. 3A and B show a detailed schematic representation of mounting elements on assembly of Fig.1 and 2 in a perspective view.

### Detailed description of the invention

The present invention is based on an assembly that can be placed and installed over the top ridge of a roof of a building with a sloped roof. The assembly comprises a first panel and a second panel wherein at least one of the first and second panel comprises one or more integrated functional element(s), wherein the first and second panels are connected to each other via a hinged connection part which allows an adjustable angle between the first and second panel. The first and second panels have the hinged part on a first end of the panels. Because the hinged connection part is intended to be positioned on the ridge or top of a roof construction, these first ends are intended to form the upper ends of the panels when placed on a roof construction. In line with this, the second ends of the panels opposite to the hinged connection part form bottom ends of the panels when the assembly is placed on a roof construction.

Due to the hinged connection part allowing an adjustable angle between the first and second panels the assembly can be positioned on any ridged roof construction irrespective of the slope thereof. This means that the assembly does not have to be prefabricated on the basis of a predetermined roof angle and can be adjusted to any sloped roof, including roofs which have equal slopes or different slopes at both sides of the ridge.

Before mounting it onto a roof construction the assembly according to the invention can be prefabricated, assembled and quality controlled in a controlled environment and under optimal circumstances. The assembly can be hoisted as a whole and in one part onto the roof construction. Any functional elements can be positioned easily and quickly on a roof construction, by hoisting it on the roof construction, for instance using crane. As such the present invention limits the work required on the roof, which facilitates construction and reduces risks of work accidents. In addition, the present invention allows to finish a roof in a very limited so that the roof is only open for a limited amount of time. This is in particularly advantageous in case of suboptimal weather conditions, such as rain, snow etc.

The assembly can be placed and installed on the roof battens of the construction which allows sufficient ventilation under the panels.

Installation can take place using the standard equipment for installing roofing constructions, for instance by securing the panels to the roof battens, rafters etc. using screws, bolts or any other suitable securing means.

The present invention finds particular suitability in new-build developments, although the assembly of the invention can of course also be used during renovation and sustainability improvement work in the replacement of roofs or roof parts of existing buildings, such as houses.

The assembly comprises a first panel and a second panel connected to each other via a hinge connection part.

The hinge of the hinge connection part is not limited to a specific type of hinge. As such it can be defined as any movable joint that allows to adjust the angle between the first and second panels.

The connecting hinge may be any suitable hinge for these purposes that is sufficiently strong to carry the weight of the panels hanging on it at both sides of a ridge of a roof construction. Hinges of the butt type may for instance be suitable in this context. This type of hinge is constructed of two opposite plates connected by a central pin and barrel system.

The hinge connection part may comprise a single hinge extending over a substantial or full part of the first end of the panels or may comprise multiple hinges distributed over a substantial or full part of the first end of the panels.

When positioned over the ridge of a roof construction of a building with the first panel on one side of the ridge and the second panel on the opposite side of the ridge, measures may be taken to avoid water ingress into the building via the top (i.e. via the hinge connection of the assembly. In that respect, after positioning the assembly on top of a roof construction ridge tiles may be mounted and fixed to the assembly to provide a cover over the hinge connection part. Such ridge tiles preferably also overlap the first (top) ends of the first and second panels to a small extent to maximally avoid water ingress via the top of the roof.

In a preferred embodiment however, the first panel comprises a first arched flange and the second panel comprises a second arched flange; wherein the first and second arched flanges are configured to protrude at least partially over the hinged connection and overlay each other at least partially when the assembly is placed on the ridge of a roof construction. These flanges can be included in the prefabricated assembly so that no substantial additional work on the roof is required in the sense of covering the hinge connection. The flanges can slide over each other when upon adjusting the angle between the first and second panel via the hinge connection to create the desired slope and provide a cover over the hinge connection part to avoid water ingress. It is preferred that the flanges overlap for a major part of the arches when the assembly is mounted on the ridge, so as to minimize the risk of water ingress. This way the hinged connection part can form a watertight top of the roof.

The arched flanges may be fixed to a base material or frame of the first and second panels or may be integral with the base material or frame of the first and second panels.

The first and second panels may comprise a base material or frame to which functional elements may be mounted to be integrated in the panel. In an embodiment the panel may comprise multiple smaller panels arranged in an array of one or more rows next to each other and/or below each other. The functional elements are integrated in the panels. In the context of the present invention "integrated" means that the functional elements may be included on or through the panels or form the panels as such. The functional elements may be integrated on a panel surface or through the panel or any other suitable way.

The assembly may comprise one functional element integrated in one of the first or second panel. In order to maximally exploit the technical advantages offered by the present invention, it is however preferred that the assembly comprises multiple different functional elements integrated in at least one of the first and second panel.

In a preferred embodiment the assembly of the invention is used in the collection of solar energy, because the present invention allows solar panels to be mounted on a roof from above instead of from below, as is custom in present practice. High placement of solar panels is preferred because the higher a solar panel is placed the more sunlight will be captured, in particular in view of the increasing absence of shadow-casting objects. In this respect it is preferred that at least one of the first and second panel comprises one or more solar panels, such as one or more photovoltaic collector, thermal collector or a combination thereof, as functional elements. These collectors may be mounted on a base material such as a wooden plate or any other suitable material or on a base from. Alternatively, it is also conceivable that a collector forms the first or second panel.

In a preferred embodiment these collectors are arranged in arrays of multiple solar panels arranged on the first and/or second panel in an array of one or more rows next to each other and/or below each other. It is preferred that within such an array a so-called dummy panel is provided behind or within which elements for supporting photovoltaic or thermal collectors are arranged. Such supporting elements may include cable work, electrical circuitry and any other means known in the art for supporting collections and processing of solar energy. In this respect it is preferred that at least one of the first and second panels comprises a panel part that accommodates support elements as functional elements for functional support of said solar panels. For the sake of efficiency, it is preferred that at least one of the first and second panels comprises a panel part that accommodates support elements support elements for functional support of said one or more solar panel as well as a panel part that accommodates one or more solar panel.

Alternatively to solar panels or in addition, a function element in the context of the invention may relate to a different application. For instance, functional parts may be skylights, ventilation elements and/or ducting terminals, for instance a chimney, a terminal of a heat recovery system or a terminal of a central heating system. By way of example therefore, in an embodiment at least one of the first and second panels comprises one or more parts accommodating skylight as functional element. Alternatively, or in addition thereto, at least one of the first and second panels may comprise one or more parts accommodating a ventilation element and/or a roof terminal of a duct as functional element.

In a preferred embodiment one or more ventilation elements are provided as part of the hinged connection part. Such ventilation elements may for instance be provided at opposite terminal parts of the hinged connection part (as seen in the longitudinal direction of the roof ridge) and may be passive ventilation elements or powered ventilation elements (active ventilation elements). It is preferred to include passive ventilation elements at opposite ends of the hinged connection part (as seen in the longitudinal direction of the roof ridge). The inclusion of ventilation elements in the hinged connection allows to ventilate the roof construction via the ridge, so that adequate ventilation is achieved.

In a preferred embodiment the first and second panels can be expanded at the side ends. Alternatively, or in addition the first and second panels can be expanded the bottom (second) ends, for instance with another row of solar panels or any other elements. This allows further flexibility with regard to the use of the assembly because it can be customed to any roof. For instance, in case the opposite sides of a roof differ in size. Therefore, it is preferred that the assembly comprising mounting elements on the ends of the panels opposite to the arched flanges or on the sides of the panel for mounting further roof elements to the first and/or second panels. Such mounting elements may for instance be in the form of (rectangular) hook connectors, wherein a hook connector of the first and/or second panel can engage with a respective hook connector of a structure to be mounted thereto, such as another row of solar panels.

The first and second panels may be provided with any other functional elements, for instance for optimizing prevention of water ingress, for instance using further flanges or gutters, etc.

Once placed over the ridge of a roof construction, the roof can be finished off in line with customary practice in the art. This may for instance involve sealing the lower edges and/or side edges of the panels to the roof construction or an existing roof part. Suitable approaches for this include using a lead or lead-substitute slab. Such a lead or lead-substitute slab may also be prefabricated with the assembly and form part of the assembly as such.

### Detailed description of the drawings

The present drawings are meant to illustrate the principle of the invention and not to limit the scope thereof.

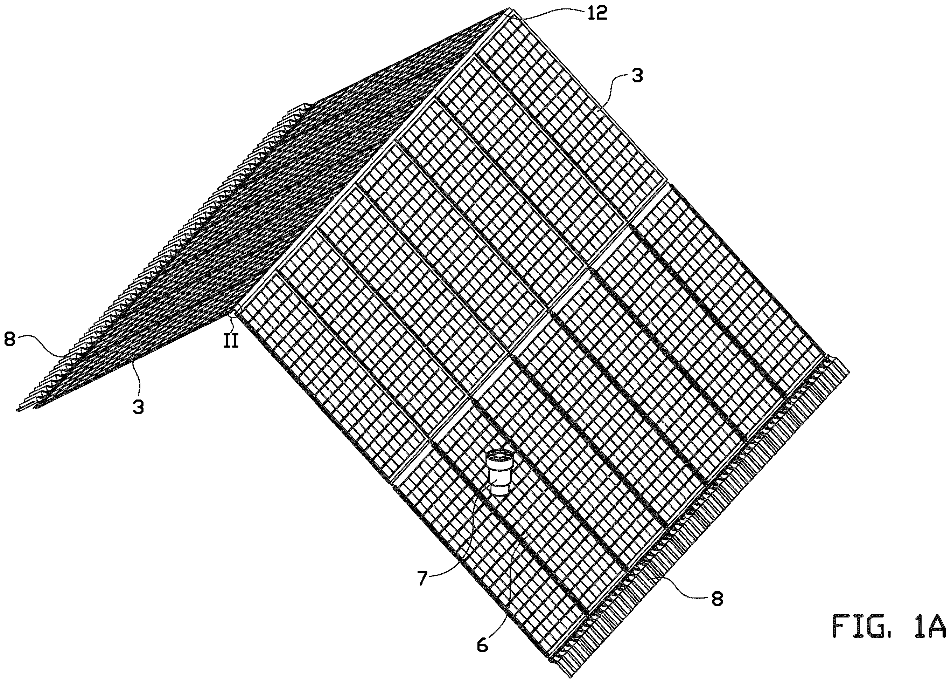

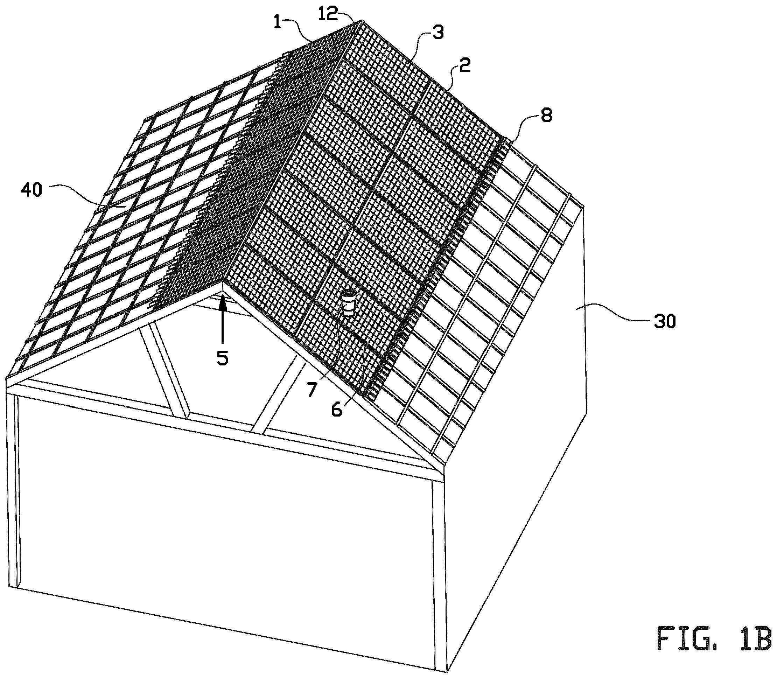

Figures 1 - 3 show an exemplary embodiment of an assembly according to the invention. Figure 1A shows the assembly prior to mounting it on a roof construction. Figure 1B shows the assembly when placed on a roof construction 40 of a building 30. The assembly comprises a comprising a first panel 1 and a second panel 2, wherein both first and second panel comprise an array of solar panels 3.

In the present embodiment, the second panel 2 comprises, apart from an array of solar panels 3 also a so-called dummy panel 6. Any supporting equipment for the solar panels can be installed behind or in this dummy panel. Also further functional elements, such as duct terminal 7 can be installed in the dummy panel 6 to make optimal use of the panel surface.

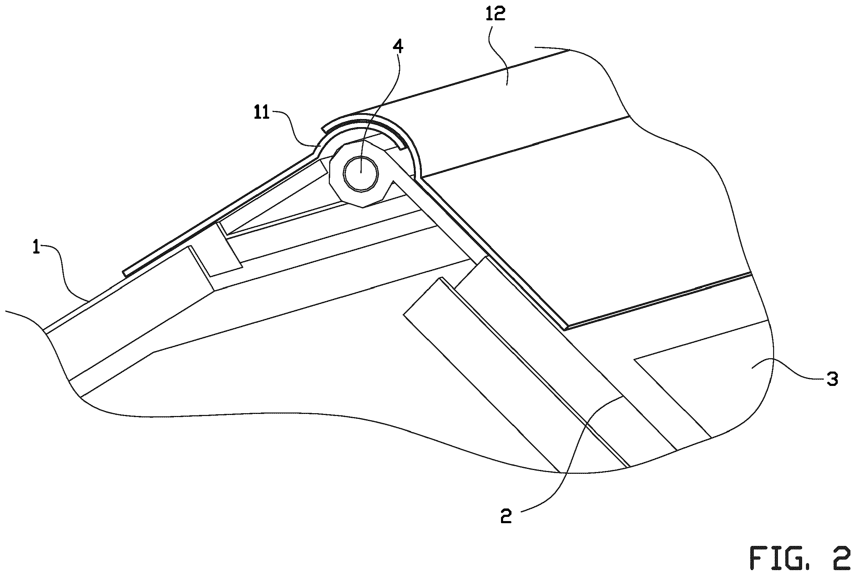

As can be seen in Fig. 2, which shows the part indicated with II in Fig. 1A in detail, the first and second panels 1, 2 are connected to each other via a hinged connection part 4 which allows an adjustable angle between the first and second panel 1, 2.

In the present embodiment the first panel 1 comprises a first arched flange 11 and the second panel comprises a second arched flange 12. The first and second arched flanges 11, 12 extend for a major part thereof over the hinged connection 4 and overlay each other at least partially when the assembly is placed on the ridge 5 of a roof construction as in Fig. 1B.

Once placed over the ridge of the roof construction 40, the roof can be finished off in line with customary practice in the art. In the present embodiment this involve sealing at least the lower edges of the panels to the roof construction 40. In the present embodiment a lead or lead-substitute slab 8 is used for this as can be seen in Fig.1. Such a lead or lead-substitute slab 8 may also be prefabricated with the assembly and form part of the assembly as such.

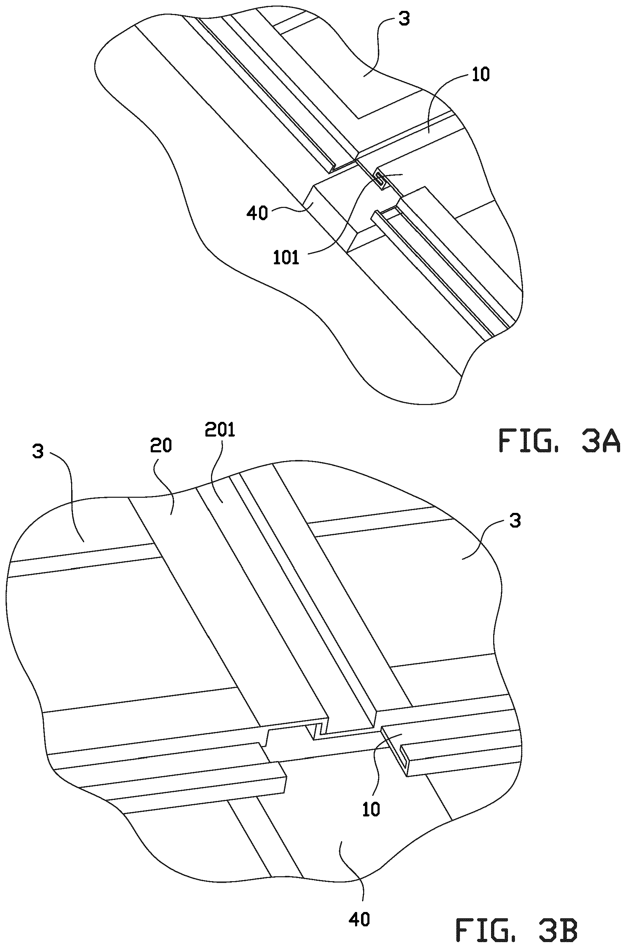

The first and second panels can be expanded at the side ends and/or at the bottom ends, for instance with another row of solar panels, such as the lower row in the first panel. Therefore, as shown in Fig.3A and B the assembly of this embodiment comprises mounting elements in the form of rectangular hook connectors 10, 101, 20, 201. Fig. 3A shows that a hook connector 10 of the second panel 2 in the horizontal plane thereof can engage with a respective hook connector 101 of a structure to be mounted thereto, such as the lower row of solar panels of the second panel 2. Also the sides of the panels can be expanded when desired, as shown in Fig. 3B wherein a hook connector 20 of the second panel extending in the direction between the top and bottom ends thereof can engage with a respective hook connector 201 of a structure to be mounted thereto.

## Claims

1. Assembly for placement on the ridge of a roof construction,
comprising a first panel and a second panel, wherein at least one of the first and second panel comprises one or more integrated functional element(s);
wherein the first and second panels are connected to each other via a hinged connection part which allows an adjustable angle between the first and second panel.

2. Assembly according to claim 1, wherein the first panel comprises a first arched flange and the second panel comprises a second arched flange; wherein the first and second arched flanges are configured to protrude at least partially over the hinged connection and overlay each other at least partially when the assembly is placed on the ridge of a roof construction.

3. Assembly according to claim 1 or 2, wherein the assembly comprises multiple different integrated functional elements integrated in at least one of the first and second panel.

4. Assembly according to any of the previous claims, wherein at least one of the first and second panel comprises one or more solar panels, in particular one or more photovoltaic collector, thermal collector or a combination thereof, as functional elements.

5. Assembly according to claim 4, wherein at least one of the first and second panel comprises an array of solar panels.

6. Assembly according to claim 4 or 5, wherein at least one of the first and second panels comprises a panel part that accommodates support elements as functional elements for functional support of said one or more solar panels.

7. Assembly according to claim 6, wherein at least one of the first and second panels comprises a panel part that accommodates support elements for functional support of said one or more solar panels and a panel part that accommodates one or more solar panels.

8. Assembly according to any of the previous claims wherein at least one of the first and second panels comprises one or more parts accommodating a skylight as functional element.

9. Assembly according to any of the previous claims wherein at least one of the first and second panels comprises one or more parts accommodating a ventilation element and/or a roof terminal of a duct as functional element.

10. Assembly according to any of the previous claims, comprising one or more ventilation elements as part of the hinged connection part.

11. Assembly according to any of the previous claims comprising mounting elements on the ends of the panels opposite to the arched flanges or on the sides of the panel for mounting further roof elements to the first and/or second panels.

12. Building construction comprising a ridged roof, wherein the assembly according to any of the claims 1 to 11 is positioned over the ridge of a roof construction of said building with the first panel on one side of the ridge and the second panel on the opposite side of the ridge.

13. Method of constructing a building comprising placing the assembly of claims 1 to 11 over the ridge of a roof construction with the first panel on one side of the ridge and the second panel on the opposite side of the ridge.

14. Method of constructing a building according to claim 13, comprising sealing the lower edges and/or side edges to the roof construction or an existing roof part.

15. Method according to claim 14, wherein sealing is carried out using a lead or lead-substitute slab.
